# EUROPÄISCHE PATENTSCHRIFT

(11) **EP 0 819 843 B1**
(45) Veröffentlichungstag und Bekanntmachung des Hinweises auf die Patenterteilung: **14.11.2001**
(21) Anmeldenummer: 97103836.9
(22) Anmeldetag: 07.03.1997
(51) Int. Cl.: F02M 37/00, F16K 17/04, F16K 15/04

(54) **Strömungsventil**
Flow valve
Soupape d'écoulement

(30) Priorität: 16.07.1996 DE 19628580
(43) Veröffentlichungstag der Anmeldung: 21.01.1998
(73) Patentinhaber: VDO Adolf Schindling AG, 60326 Frankfurt/Main (DE)
(72) Erfinder: Eck, Karl, 60489 Frankfurt (DE)
(74) Vertreter: Klein, Thomas, Dipl.-Ing. (FH)

(56) Entgegenhaltungen:
- EP-A- 0 678 664
- DE-A- 4 426 735
- DE-A- 4 426 946
- US-A- 5 289 810

## Beschreibung

Die Erfindung betrifft ein Strömungsventil für eine Kraftstoffversorgungsanlage, bei der eine in einem Kraftstoffbehälter angeordnete Kraftstoffördereinrichtung zum Fördern von Kraftstoff über eine Kraftstoffleitung zu einer Brennkraftmaschine vorgesehen ist, mit einem ein Teilstück der Kraftstoffleitung bildenden Hauptkanal, mit einem von dem Hauptkanal abgezweigten Anschlußstück für eine zu einer Saugstrahlpumpe führenden Zweigleitung und mit einem in dem Hauptkanal angeordneten, in Grundstellung einen Ventilsitz des Anschlusses verschließenden, zum Steuern der Zweigleitung vorgesehenen Schließglied, wobei zwischen dem Schließglied und einer Wandung des Hauptkanals ein als Drosselstelle für den zur Brennkraftmaschine strömenden Kraftstoff ausgebildeter Durchlaß angeordnet ist.

Solche Strömungsventile werden bei heutigen Kraftfahrzeugen in der Regel zum Steuern einer einen Schwalltopf befüllenden Saugstrahlpumpe eingesetzt und sind damit bekannt (DE 44 26 946 A1). Das Strömungsventil hat die Aufgabe, die Zweigleistung zur Saugstrahlpumpe beim Start der Brennkraftmaschine abzusperren, da die Kraftstoffördereinrichtung beim Start der Brennkraftmaschine häufig nur eine geringe Menge Kraftstoff fördert. Insbesondere fördert eine elektrisch versorgte Kraftstoffördereinrichtung beim Start besonders wenig Kraftstoff, da eine die Kraftstoffördereinrichtung versorgende Starterbatterie bei niedrigen Temperaturen eine besonders geringe Leistung hat. Durch das Strömungsventil soll vermieden werden, daß ein Teil der ohnehin geringen Menge des geförderten Kraftstoffs beim Start der Brennkraftmaschine für die Saugstrahlpumpe abgezweigt wird. Kurz nach einem Start der Brennkraftmaschine erzeugt ein Generator der Brennkraftmaschine in der Regel genügend Leistung, so daß das Strömungsventil öffnet und die Saugstrahlpumpe ebenfalls mit Kraftstoff versorgt wird.

Bei dem bekannten Strömungsventil ist das Schließglied mit einer Feder gegen den Ventilsitz vorgespannt und zum Öffnen in Strömungsrichtung hin ausgebildet. In dem Schließglied oder zwischen dem Schließglied und der Wandung des Hauptkanals sind ein oder mehrere als Drosselstellen ausgebildete Durchlässe für den Kraftstoff angeordnet. Die geringe Menge an Kraftstoff, die beim Start der Brennkraftmaschine von der Kraftstoffördereinrichtung gefördert wird, gelangt durch die Durchlässe zu der Brennkraftmaschine. Nach dem Start wird eine größere Menge Kraftstoff gefördert, wodurch sich vor und hinter dem Schließglied eine Druckdifferenz aufbaut und das Schließglied von dem Ventilsitz wegdrückt. Anschließend gelangt der von der Kraftstoffördereinrichtung geförderte Kraftstoff zu der Brennkraftmaschine und über die Zweigleitung zu der Saugstrahlpumpe.

Nachteilig bei dem bekannten Strömungsventil ist, daß das Schließglied in Strömungsrichtung des Kraftstoffs hin öffnend ausgebildet ist. Dies hat zur Folge, daß das Strömungsventil aufwendig gestaltet ist und sehr große Abmessungen erfordert. Die Abmessungen sind durch die vor und nach dem Schließglied von der Kraftstoffördereinrichtung zu erzeugende Druckdifferenz, oberhalb der das Strömungsventil öffnen soll, festgelegt. In dem Schließglied anzuordnende Durchlässe führen zu einer weiteren Vergrößerung der Abmessungen des Schließgliedes. Weiterhin muß der Hauptkanal in dem Bereich, in dem sich das Schließglied in der Offenstellung des Strömungsventils befindet, zur Umströmung mit Kraftstoff eine radiale Erweiterung aufweisen. Da das Schließglied der Strömung einen großen Widerstand entgegensetzt, muß diese radiale Erweiterung zudem besonders groß sein.

Es ist weiterhin ein in der Vorlaufleitung angeordneter Druckregler bekannt, der die abgeregelte Menge drucklos in den Kraftstoffbehälter ableitet (EP 0 678 664 A2). Der Druckregler weist einen in die Vorlaufleitung hineinragenden Ventilsitz und ein Schließglied auf, wobei die Vorlaufleitung mittels einer Membran vom Kraftstoffbehälter getrennt ist. Neben der relativ aufwendigen Gestaltung des Druckreglers sind die Strömungsverluste aufgrund des in die Vorlaufleitung hineinragenden Ventilsitzes besonders nachteilig.

Der Erfindung liegt das Problem zugrunde, ein Strömungsventil der eingangs genannten Art so zu gestalten, daß es möglichst einfach zu fertigen ist und besonders kleine Abmessungen aufweist.

Dieses Problem wird erfindungsgemäß dadurch gelöst, daß der Ventilsitz in einer parallel zur Strömungsrichtung des Kraftstoffs ausgerichteten Wandung des Hauptkanals angeordnet ist und das Schließglied und/oder der Hauptkanal ein Mittel zur Bewegung des Schließgliedes quer zur Strömungsrichtung aufweist, wobei das Mittel ein zwischen der Wandung des Hauptkanals und der dem Ventilsitz abgewandten Seite des Schließgliedes angeordneter Spalt ist oder eine in einen seitlichen Bereich des Hauptkanals hineinragende, in Strömungsrichtung des Hauptkanal gesehen zu dem Ventilsitz hin verlaufende Strömungsleitschaufel ist.

Durch diese Gestaltung wird das Schließglied bei einem Start der Brennkraftmaschine quer zu der Strömungsrichtung bewegt und damit weitgehend aus der Strömung im Hauptkanal entfernt. Das Schließglied benötigt zum zuverlässigen Steuern der Zweigleitung keine Durchlässe, weshalb es besonders kleine Abmessungen hat und sehr einfach zu fertigen ist. Das Schließglied entfernt sich durch die Strömung umso weiter aus der Strömung, je stärker diese ist. Hierdurch wird der Hauptkanal von der Strömung weitgehend gerade durchströmt, so daß das Schließglied in der Offenstellung des Strömungsventils auf die Strömung im Hauptkanal nur eine unbedeutende Drosselung ausübt. Durch die geringe Drosselung der Strömung im Hauptkanal bei einer Offenstellung kann das Strömungsventil besonders geringe Abmessungen aufweisen.

Das Strömungsventil ist soweit besonders einfach aufgebaut und vereinfacht beispielsweise eine Fertigung des Strömungsventils im Spritzgießverfahren.

Die Ausbildung des Mittels als Spalt hat den Vorteil, daß bei einer Durchströmung des Spaltes mit Kraftstoff ein dynamischer Unterdruck entsteht, der das Schließglied zunächst von dem Ventilsitz abhebt. Anschließend wird das Schließglied von dem Kraftstoff aus der Strömung gedrückt. Ist das Mittel eine Strömungsleitschaufel, so wird das Schließglied durch eine mit einem Ansteigen der Strömungsgeschwindigkeit stärker werdende, quer zur Strömungsrichtung verlaufende Kraft bewegt.

Das Schließglied ist gemäß einer anderen vorteilhaften Weiterbildung der Erfindung besonders einfach zu fertigen, wenn es kugel- oder walzenförmig gestaltet ist. Weiterhin besitzt das Schließglied durch diese Gestaltung eine besonders strömungsgünstige Form, so daß es der Strömung in dem Hauptkanal einen besonders geringen Widerstand entgegensetzt.

Das Schließglied wird gemäß einer anderen vorteilhaften Weiterbildung der Erfindung zuverlässig in die oder aus der das Anschlußstück für die Zweigleitung versperrenden Stellung bewegt, wenn in dem Hauptkanal zumindest ein Führungselement für das Schließglied angeordnet ist.

Das Führungselement gestaltet sich gemäß einer anderen vorteilhaften Weiterbildung der Erfindung konstruktiv besonders einfach, wenn der Ventilsitz eine Schräge als Führungselement aufweist.

Ein Verkanten und damit ein Klemmen des Schließgliedes wird gemäß einer anderen vorteilhaften Weiterbildung der Erfindung zuverlässig verhindert, wenn in dem Hauptkanal im wesentlichen quer zur Strömungsrichtung verlaufende Rippen als Führungselemente angeordnet sind.

In der geöffneten Stellung des Strömungsventils ist es vorteilhaft, wenn der Kraftstoff den Hauptkanal möglichst verwirbelungsfrei durchströmt. Verwirbelungen, die beispielsweise durch ein Umströmen des Schließgliedes bei dem bekannten Strömungsventil hervorgerufen werden, können insbesondere bei höheren Temperaturen ein Ausgasen des Kraftstoffs begünstigen. Weiterhin erzeugen diese Verwirbelungen im Bereich des Schließgliedes einen Druckabfall, der durch eine besonders große Abmessungen des Hauptkanals ausgeglichen werden muß. Die Strömung des Kraftstoffs verläuft in dem Hauptkanal besonders verwirbelungsfrei, wenn das Strömungsventil eine Ausnehmung zur Aufnahme des Schließgliedes in einer weitgehend außerhalb des Hauptkanals angeordneten Position hat. Durch diese Gestaltung wird das Schließglied durch die Strömung des Kraftstoffs aus der Grundstellung von dem Ventilsitz weggedrückt und gleichzeitig aus der Strömung des Kraftstoffs im Hauptkanal entfernt.

Das Schließglied könnte beispielsweise mit einer Feder in die Grundstellung vorgespannt sein. Diese Gestaltung hat jedoch den Nachteil, daß die auf das Schließglied ausgeübte Federkraft mit zunehmender Entfernung des Schließgliedes von dem Ventilsitz zunimmt. Da die der Feder entgegenwirkende Kraft von der Strömung des Kraftstoffs aufgebracht werden muß, wird die Strömung in dem Hauptkanal ständig stark gedrosselt. Das Schließglied wird in der Grundstellung zuverlässig auf dem Ventilsitz gehalten und benötigt eine besonders geringe Kraft zum Halten in der von dem Ventilsitz entfernten Stellung, wenn das Schließglied und der Ventilsitz oder ein an den Ventilsitz angrenzender Bereich zum Haltern des Schließgliedes auf dem Ventilsitz jeweils magnetische Elemente aufweisen. Diese Anordnung der magnetischen Elemente hat den Vorteil, daß die auf das Schließglied ausgeübte Kraft mit zunehmender Entfernung des Schließgliedes von dem Ventilsitz abnimmt, wodurch eine besonders geringe Kraft zum Halten des Stellgliedes in der von dem Ventilsitz entfernten Stellung erforderlich ist.

Separat anzuordnende Bauteile zum Halten des Schließgliedes in der Grundstellung, wie beispielsweise die Feder oder magnetische Elemente, werden gemäß einer anderen vorteilhaften Weiterbildung der Erfindung nicht benötigt, wenn das Schließglied eine geringere spezifische Dichte als der Kraftstoff hat und wenn der Ventilsitz oberhalb des Schließgliedes angeordnet ist. Das Schließglied wird damit in Grundstellung wie ein Schwimmer gegen den Ventilsitz gedrückt. Durch die Einsparung eines Bauteils wird eine weitere Vereinfachung des Strömungsventils erreicht, so daß sich dessen Fertigungskosten weiter verringern.

Das Schließglied liegt in Grundstellung gemäß einer anderen vorteilhaften Weiterbildung der Erfindung zuverlässig auf dem Ventilsitz auf, wenn das Schließglied eine höhere spezifische Dichte als der Kraftstoff hat und wenn der Ventilsitz unterhalb des Schließgliedes angeordnet ist.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig. 1: eine Kraftstoffversorgungsanlage mit einem erfindungsgemäßen Strömungsventil,
- Fig.2: das Strömungsventil aus Fig. 1 in einer Grundstellung,
- Fig.3: das Strömungsventil aus Fig.1 in einer geöffneten Stellung,
- Fig.4 - 6: weitere Ausführungsformen des erfindungsgemäßen Strömungsventils.

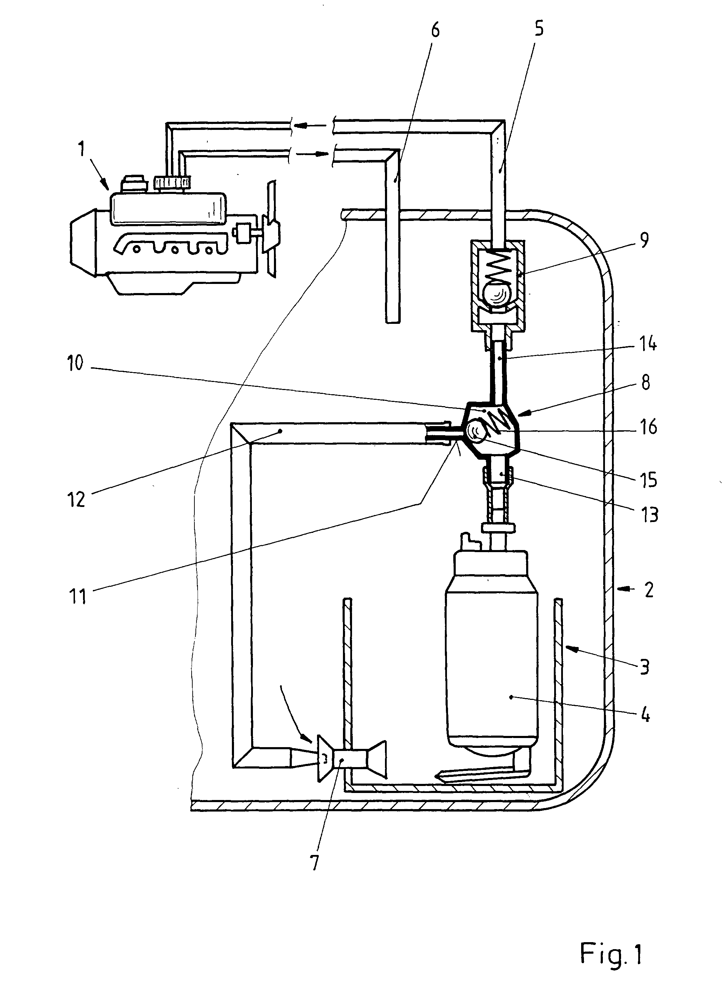

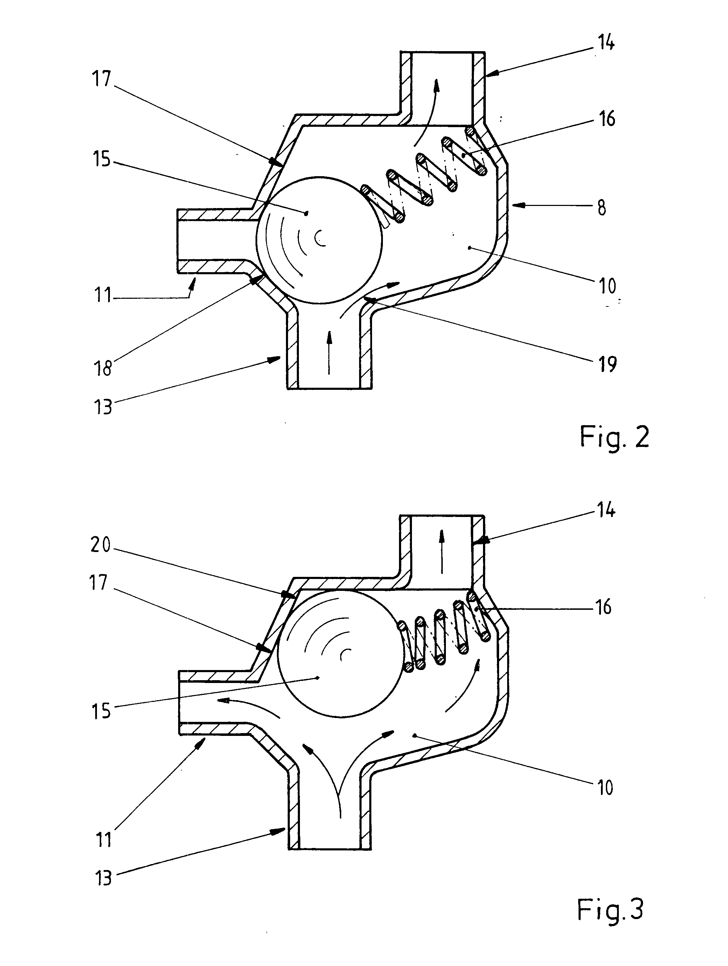

Die Figur 1 zeigt eine Kraftstoffversorgungsanlage zur Versorgung einer Brennkraftmaschine 1 mit Kraftstoff aus einem Kraftstoffbehälter 2. Der Kraftstoffbehälter 2 weist einen Schwalltopf 3 auf, in dem eine Kraftstoffördereinrichtung 4 angeordnet ist. Von der Kraftstoffördereinrichtung 4 führt eine Versorgungsleitung 5 zu der Brennkraftmaschine 1. Eine zur Rückführung zuviel geförderten Kraftstoffs vorgesehene Rücklaufleitung 6 führt von der Brennkraftmaschine 1 zu dem Schwalltopf 3. Der Schwalltopf 3 wird über eine in seinem unteren Bereich angeordnete Saugstrahlpumpe 7 mit Kraftstoff aus dem Kraftstoffbehälter 2 gefüllt. In der Versorgungsleitung 5 sind ein Strömungsventil 8 und ein Rückschlagventil 9 angeordnet. Das Strömungsventil 8 hat einen ein Teilstück der Versorgungsleitung 5 bildenden Hauptkanal 10 und ein Anschlußstück 11, an dem eine zu der Saugstrahlpumpe 7 führende Zweigleitung 12 angeschlossen ist. Das Strömungsventil 8 dient dazu, während eines Startens der Brennkraftmaschine 1 ein Überströmen des Kraftstoffs zu der Saugstrahlpumpe 7 zu verhindern.

Der Aufbau und die Funktion des Strömungsventils 8 aus Figur 1 ist besonders deutlich in den Figuren 2 und 3 zu erkennen. Zur Verdeutlichung der Funktion des Strömungsventils 8 ist die Strömung des Kraftstoffs mit Pfeilen gekennzeichnet. Der Hauptkanal 10 führt von einem Einlaß 13 zu einem Auslaß 14 des Strömungsventils 8. Das Anschlußstück 11 mündet seitlich in den Hauptkanal 10 und ist von einem kugelförmigen Schließglied 15 versperrbar. Das Schließglied 15 ist von einer Feder 16 in eine in Figur 2 eingezeichnete Grundstellung vorgespannt und von der Strömung im Hauptkanal entlang einer Schräge 17 in eine in Figur 3 eingezeichnete Offenstellung verschiebbar.

In der in Figur 2 eingezeichneten Grundstellung des Strömungsventils 8 aus Figur 1 ist das Schließglied 15 von der Feder 16 gegen einen Ventilsitz 18 des Anschlußstücks 11 vorgespannt. In dieser Stellung hat der Hauptkanal 10 zwischen einer Wandung und dem Schließglied 15 einen Spalt 19 als Drosselstelle. Dieser Spalt 19 ist auf der dem Ventilsitz 18 abgewandten Seite des Schließgliedes 15 angeordnet. Bei einer Strömung von Kraftstoff im Hauptkanal 10 entsteht in dem Spalt 19 ein dynamischer Unterdruck, der auf das Schließglied 15 eine von dem Ventilsitz 18 weggerichtete Kraft ausübt. Oberhalb einer vorgesehenen Strömungsgeschwindigkeit wird diese Kraft so groß, daß das Schließglied 15 senkrecht von dem Ventilsitz 18 und damit quer zur Strömungsrichtung angehoben wird. Anschließend wird das Schließglied 15 von der Strömung entlang der Schräge 17 in die Offenstellung gedrückt.

Das Schließglied befindet sich bei der in Figur 3 dargestellten Offenstellung in einer die Strömung im Hauptkanal 10 nicht behindernden Ausnehmung 20. Hierdurch werden von dem Schließglied 15 nur unwesentliche Verwirbelungen des Kraftstoffs in dem Hauptkanal 10 erzeugt. Bei einem Abschalten der in Figur 1 dargestellten Kraftstoffördereinrichtung 4 wird das Schließglied 15 von der Feder 16 wieder in die in Figur 2 dargestellte Grundstellung zurückbewegt.

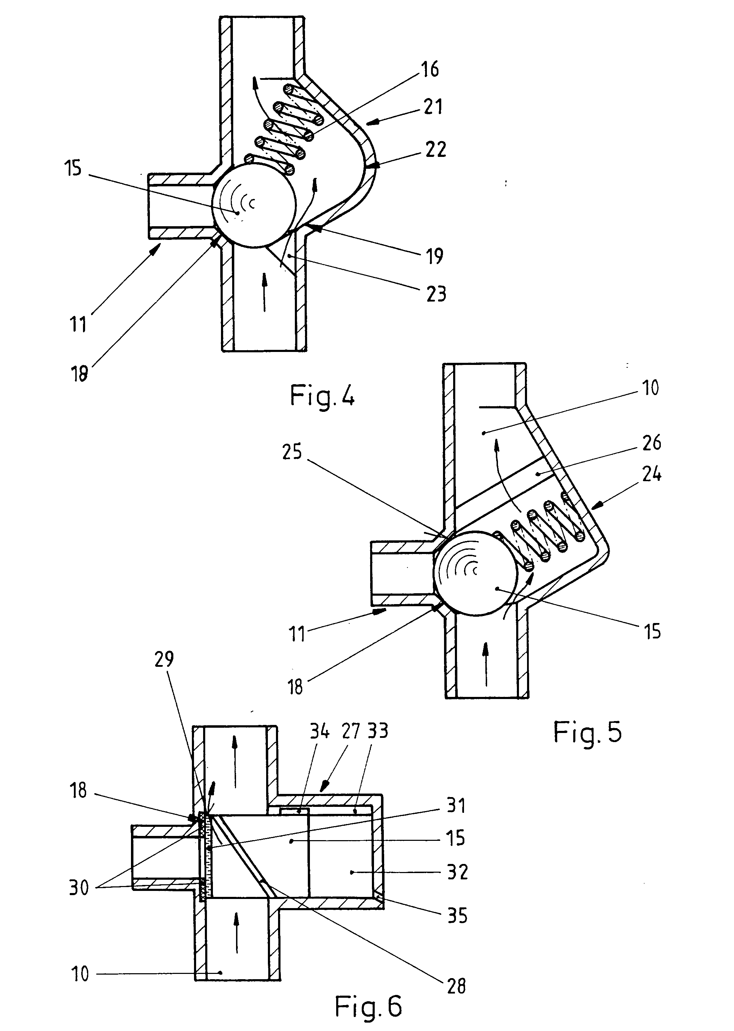

Bei einer in Figur 4 dargestellten Ausführungsform eines Strömungsventils 21 ist eine Ausnehmung 22 für das Schließglied 15 in der dem Ventilsitz 18 gegenüberliegenden Wandung des Hauptkanals 10 eingearbeitet. Die Feder 16 ist schräg im Hauptkanal 10 angeordnet und drückt das Schließglied 15 in der eingezeichneten Grundstellung des Strömungsventils 21 auf den Ventilsitz 18. Wie bei der in den Figuren 2 und 3 dargestellten Ausführungsform des Strömungsventils 8 ist der Spalt 19 auf der dem Ventilsitz 18 abgewandten Seite des Schließgliedes 15 angeordnet. Eine in dem Hauptkanal 10 längs in Strömungsrichtung ausgerichtete Nase 23 verhindert ein Verschließen des Einlasses 13 des Strömungsventils 21.

Die Figur 5 zeigt ein Strömungsventil 24 in einer Grundstellung, bei dem der Ventilsitz 18 im Anschlußstück 11 eine trichterförmige Schräge 25 zur Aufnahme des Schließgliedes 15 hat. Die Schräge 25 ist von einer Rippe 26 bis zur gegenüberliegenden Wandung des Hauptkanals 10 verlängert. Diese Schräge 25 und die Rippe 26 dienen zur Führung des Schließgliedes 15 im wesentlichen quer zur Strömungsrichtung im Hauptkanal 10.

Bei einer in Figur 6 dargestellten Ausführungsform eines Strömungsventils 27 hat das Schließglied 15 in einem seitlichen Bereich eine Strömungsleitschaufel 28. Diese Strömungsleitschaufel 28 ist in Strömungsrichtung im Hauptkanal 10 gesehen zu dem Ventilsitz 18 hin verlaufend gestaltet. In der eingezeichneten Grundstellung des Strömungsventils 27 hat der Hauptkanal 10 nahe des Ventilsitzes 18 einen Durchlaß 29 für den Kraftstoff. Der Ventilsitz 18 und das Schießglied 15 haben jeweils magnetische Elemente 30, 31, mit denen das Schließglied 15 in der Grundstellung gehalten wird. Eine Strömung des Kraftstoffs durch den Durchlaß 29 erzeugt auf das Schließglied 15 eine von dem Ventilsitz 18 weggerichtete Kraft. Oberhalb einer vorgesehenen Strömungsgeschwindigkeit übersteigt die von der Strömung auf das Schließglied 15 ausgeübte Kraft die magnetischen Haltekräfte. Das Schließglied 15 wird anschließend quer zu der Strömungsrichtung in eine außerhalb der Strömung befindliche Ausnehmung 32 bewegt. Zur Führung hat die Ausnehmung 32 eine Führungsnut 33 und das Schließglied 15 eine in die Führungsnut 33 eingreifende Nase 34. Die Ausnehmung 32 hat zur Entlüftung eine Entlüftungsbohrung 35. Nach einem Abschalten der in Figur 1 dargestellten Kraftstoffördereinrichtung 4 wird das Schließglied 15 von den magnetischen Kräften der magnetischen Elemente 30, 31 wieder in die Grundstellung auf den Ventilsitz 18 bewegt. Zur Unterstützung dieser Bewegung kann das Schließgeld 15 zusätzlich eine höhere Dichte als der Kraftstoff aufweisen und der Ventilsitz 18 unterhalb des Schließgliedes 15 angeordnet sein.

## Patentansprüche

1. Strömungsventil für eine Kraftstoffversorgungsanlage, bei der eine in einem Kraftstoffbehälter angeordnete Kraftstoffördereinrichtung zum Fördern von Kraftstoff über eine Kraftstoffleitung zu einer Brennkraftmaschine vorgesehen ist, mit einem ein Teilstück der Kraftstoffleitung bildenden Hauptkanal, mit einem von dem Hauptkanal abgezweigten Anschlußstück für eine zu einer Saugstrahlpumpe führenden Zweigleitung und mit einem in dem Hauptkanal angeordneten, in Grundstellung einen Ventilsitz des Anschlusses verschließenden, zum Steuern der Zweigleitung vorgesehenen Schließglied, wobei zwischen dem Schließglied und einer Wandung des Hauptkanals ein als Drosselstelle für den zur Brennkraftmaschine strömenden Kraftstoff ausgebildeter Durchlaß angeordnet ist, daß das Schließglied und/oder der Hauptkanal ein Mittel zur Bewegung des Schließgliedes quer zur Strömungsrichtung aufweist und der Ventilsitz in einer parallel zur Strömungsrichtung des Kraftstoffs ausgerichten Wandung des Hauptkanals angeordnet ist,
**dadurch gekennzeichnet, daß** das Mittel zur Bewegung des Schließgliedes (15) ein zwischen der Wandung des Hauptkanals (10) und der dem Ventilsitz (18) abgewandten Seite des Schließgliedes (15) angeordneter Spalt (19) ist oder zumindest eine in einen seitlichen Bereich des Hauptkanals (10) hineinragende, in Strömungsrichtung des Hauptkanals (10) gesehen zu dem Ventilsitz (18) hin verlaufende Strömungsleitschaufel (28) ist.

2. Strömungsventil nach Anspruch 1 **dadurch gekennzeichnet, daß** das Schließglied (15) kugel- oder walzenförmig gestaltet ist.

3. Strömungsventil nach zumindest einem der Ansprüche 1 und 2, **dadurch gekennzeichnet, daß** in dem Hauptkanal (10) ein Führungselement (17, 25, 26) für das Schließglied (15) angeordnet ist.

4. Strömungsventil nach Anspruch 3, **dadurch gekennzeichnet, daß** der Ventilsitz (18) eine Schräge (17,25) als Führungselement aufweist.

5. Strömungsventil nach Anspruch 3, **dadurch gekennzeichnet, daß** in dem Hauptkanal (10) im wesentlichen quer zur Strömungsrichtung verlaufende Rippen (26) als Führungselemente angeordnet sind.

6. Strömungsventil nach zumindest einem der vorhergehenden Ansprüche, **dadurch gekennzeichnet, daß** es eine Ausnehmung (20, 22, 32) zur Aufnahme des Schließgliedes (15) in einer weitgehend außerhalb des Hauptkanals (10) angeordneten Position hat.

7. Strömungsventil nach zumindest einem der vorhergehenden Ansprüche, **dadurch gekennzeichnet, daß** das Schließglied (15) und der Ventilsitz (18) oder ein an den Ventilsitz (18) angrenzender Bereich zum Haltern des Schließgliedes (15) auf dem Ventilsitz (18) jeweils magnetische Elemente (30, 31) aufweisen.

8. Strömungsventil nach zumindest einem der vorhergehenden Ansprüche, **dadurch gekennzeichnet, daß** das Schließglied (15) eine geringere spezifische Dichte als der Kraftsoff hat und daß der Ventilsitz (18) oberhalb des Schließgliedes (15)angeordnet ist.

9. Strömungsventil nach zumindest einem der vorhergehenden Ansprüche, **dadurch gekennzeichnet, daß** das Schließglied (15) eine höhere spezifische Dichte als der Kraftstoff hat und daß der Ventilsitz (18) unterhalb des Schließgliedes (15) angeordnet ist.

## Claims

1. Flow valve for a fuel supply system, in which a fuel feed device arranged in a fuel tank is provided for feeding fuel via a fuel line to an internal combustion engine, with a main duct forming a portion of the fuel line, with a connection piece, branched off from the main duct, for a branch line leading to a suction jet pump, and with a closing member which is arranged in the main duct and in the basic position closes a valve seat of the connection and which is provided for controlling the branch line, there being arranged between the closing member and a wall of the main duct a passage designed as a throttle point for the fuel flowing to the internal combustion engine, the closing member and/or the main duct having a means for moving the closing member transversely to the direction of flow, and the valve seat being arranged in a main-duct wall oriented parallel to the direction of flow of the fuel, **characterized in that** the means for moving the closing member (15) is a gap (19) arranged between the wall of the main duct (10) and that side of the closing member (15) which faces away from the valve seat (18) or is at least one flow guide vane (28) which projects into a lateral region of the main duct (10) and, as seen in the direction of flow of the main duct (10), runs towards the valve seat (18).

2. Flow valve according to Claim 1, **characterized in that** the closing member (15) is of spherical or cylindrical design.

3. Flow valve according to at least one of Claims 1 and 2, **characterized in that** a guide element (17, 25, 26) for the closing member (15) is arranged in the main duct (10).

4. Flow valve according to Claim 3, **characterized in that** the valve seat (18) has a slope (17, 25) as guide element.

5. Flow valve according to Claim 3, **characterized in that** ribs (26) running in the main duct (10) essentially transversely to the direction of flow are arranged as guide elements.

6. Flow valve according to at least one of the preceding claims, **characterized in that** it has a recess (20, 22, 32) for receiving the closing member (15) in a position arranged essentially outside the main duct (10).

7. Flow valve according to at least one of the preceding claims, **characterized in that** the closing member (15) and the valve seat (18) or a region, adjacent to the valve seat (18) for holding the closing member (15) on the valve seat (18), have in each case magnetic elements (30, 31).

8. Flow valve according to at least one of the preceding claims, **characterized in that** the closing member (15) has a lower specific density than the fuel, and **in that** the valve seat (18) is arranged above the closing member (15).

9. Flow valve according to at least one of the preceding claims, **characterized in that** the closing member (15) has a higher specific density than the fuel, and **in that** the valve seat (18) is arranged below the closing member (15).

## Revendications

1. Vanne d'écoulement pour une installation d'alimentation en carburant, dans laquelle un dispositif de transport de carburant disposé dans un réservoir de carburant est prévu pour transporter du carburant vers une machine à combustion interne par l'intermédiaire d'un conduit de carburant, avec un canal principal qui forme une partie du conduit de carburant, avec une pièce de raccordement dérivée du canal principal pour un conduit de dérivation conduisant à une pompe aspirante à jet et avec un organe de fermeture prévu pour la commande du conduit de dérivation, disposé dans le canal principal et fermant dans sa position de base un siège de vanne du raccordement, dans laquelle, entre l'organe de fermeture et une paroi du canal principal est disposé un passage configuré comme étranglement pour le combustible qui s'écoule en direction de la machine à combustion interne, de telle sorte que l'organe de fermeture et/ou le canal principal présentent un moyen pour déplacer l'organe de fermeture transversalement par rapport à la direction d'écoulement, et le siège de vanne est disposé dans une paroi du canal principal orientée parallèlement à la direction d'écoulement du combustible, **caractérisée en ce que** le moyen pour déplacer l'organe de fermeture (15) est un interstice (19) disposé entre la paroi du canal principal (10) et le côté de l'organe de fermeture (15) qui n'est pas tourné vers le siège de vanne (18), ou au moins une aube (28) de guidage de l'écoulement qui pénètre dans une région latérale du canal principal (10) et s'étend jusqu'au siège de vanne (18) dans la direction d'écoulement du canal principal (10).

2. Vanne d'écoulement selon la revendication 1,
**caractérisée en ce que** l'organe de fermeture (15) est configuré en forme de sphère ou de cylindre.

3. Vanne d'écoulement selon au moins l'une des revendications 1 et 2, **caractérisée en ce qu'**un élément de guidage (17, 25, 26) de l'organe de fermeture (15) est disposé dans le canal principal (10).

4. Vanne d'écoulement selon la revendication 3,
**caractérisée en ce que** le siège de vanne (18) présente comme élément de guidage un pan oblique (17, 25).

5. Vanne d'écoulement selon la revendication 3,
**caractérisée en ce que** des nervures (26) qui s'étendent essentiellement transversalement par rapport à la direction d'écoulement sont disposées dans le canal principal (10) en tant qu'éléments de guidage.

6. Vanne d'écoulement selon au moins l'une des revendications précédentes, **caractérisée en ce qu'**elle présente un évidement (20, 22, 32) pour la réception de l'organe de fermeture (15) en une position située largement à l'extérieur du canal principal (10).

7. Vanne d'écoulement selon au moins l'une des revendications précédentes, **caractérisée en ce que** l'organe de fermeture (15) et le siège de vanne (18) ou une zone adjacente au siège de vanne (18) présentent chaque fois des éléments magnétiques (30, 31) pour maintenir l'organe de fermeture (15) sur le siège de vanne (18).

8. Vanne d'écoulement selon au moins l'une des revendications précédentes, **caractérisée en ce que** l'organe de fermeture (15) a une masse spécifique inférieure à celle du carburant et **en ce que** le siège de vanne (18) est disposé au-dessus de l'organe de fermeture (15).

9. Vanne d'écoulement selon au moins l'une des revendications précédentes, **caractérisée en ce que** l'organe de fermeture (15) a une masse spécifique supérieure à celle du combustible et **en ce que** le siège de vanne (18) est disposé en dessous de l'organe de fermeture (15).
